(19) Europäisches Patentamt
European Patent Office
Office européen des brevets

(11) EP 3 761 131 B1

(12) EUROPÄISCHE PATENTSCHRIFT

(45) Veröffentlichungstag und Bekanntmachung des Hinweises auf die Patenterteilung:
01.11.2023 Patentblatt 2023/44

(21) Anmeldenummer: 20181495.1

(22) Anmeldetag: 22.06.2020

(51) Internationale Patentklassifikation (IPC):
**G05B 19/418** (2006.01)    **B21D 1/12** (2006.01)
**B21D 3/16** (2006.01)

(52) Gemeinsame Patentklassifikation (CPC):
**B21D 3/16; G05B 19/41875;** G05B 2219/36203;
G05B 2219/45143; G05B 2219/50064; Y02P 90/02

(54) **VERFAHREN UND ROBOTERSYSTEM ZUM UMFORMEN, INSBESONDERE KORREKTURUMFORMEN UND/ODER RICHTEN, VON TEILEN**

METHOD AND ROBOT SYSTEM FOR FORMING, IN PARTICULAR CORRECTION AND / OR STRAIGHTENING, OF PARTS

PROCÉDÉ ET SYSTÈME ROBOTIQUE DE FORMAGE, EN PARTICULIER DE FORMAGE CORRECTIONNEL ET/OU DE DRESSAGE DES PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2019 DE 102019117951**

(43) Veröffentlichungstag der Anmeldung:
**06.01.2021 Patentblatt 2021/01**

(73) Patentinhaber: **AutomationsRobotic GmbH 84323 Massing (DE)**

(72) Erfinder: **Steiger, Alexander 84028 Ladndshut (DE)**

(74) Vertreter: **Pescher, Manuel Dirk et al Pescher IP Patentanwaltskanzlei Watzmannring 71 85748 Garching bei München (DE)**

(56) Entgegenhaltungen:
EP-A1- 3 095 533        DE-A1-102007 002 320
DE-A1-102015 002 280

**Beschreibung**

Die vorliegende Erfindung betrifft ein Verfahren zum Umformen von Teilen, vorzugsweise von Fahrzeugteilen, gemäß Anspruch 1, ein computerlesbares Medium gemäß Anspruch 14, sowie ein Robotersystem gemäß Anspruch 15.

Bei der Herstellung von Teilen, insbesondere Fahrzeugteilen, die vorzugsweise aus Metall, wie zum Beispiel Aluminium oder Stahl, oder Metalllegierungen hergestellt sind, werden die Teile zunächst zum Beispiel durch Druckgussverfahren in eine bestimmte Form gegossen.

Aufgrund von weiteren Verarbeitungsprozessen und/oder Lagerung und/oder Transport der Teile, die nach dem Gießen aus produktionstechnischen Erwägungen notwendig sein können, kann es allerdings zu ungewollten Verformungen der Teile kommen, wodurch die Abmessungen der Teile nicht mehr den gewünschten Abmessungen entsprechen. Um bei der Fertigung der Teile ein hohes Maß an Präzision/Qualität zu erreichen, müssen die ungewollten Verformungen korrigiert werden. Die verformten Teile werden zurück in die ursprünglich gewünschte Form gebracht. Dieser Prozess wird auch als Richten bezeichnet. Typische Umformungen können hierbei beispielsweise Biegeformungen sein.

Im Stand der Technik werden Teile, die beispielsweise zu einem Federstützteil oder zu einer vorderen Dämpferbrücke eines Fahrzeugs verarbeitet werden, typischerweise händisch bearbeitet bzw. nach- und/oder zwischenbearbeitet, um sicherzustellen, dass die gewünschten Abmessungen der Teile eingehalten werden. Das händische Bearbeiten bzw. Nach- und/oder Zwischenbearbeiten der Teile ist allerdings kosten- und zeitintensiv. Die Zeit, die für eine Umformung eines Teils benötigt wird, bis das Teil die gewünschten Abmessungen einhält, wird nachfolgend als Zykluszeit bezeichnet.

Ein Grund für das händische Bearbeiten liegt darin, dass die physikalischen Materialeigenschaften der Teile, unter anderem durch Temperaturschwankungen und Lagerzeiten beeinflusst werden. Eine Modellierung der Materialeigenschaften und des Elastizitätsverhaltens, die für mehrere Teile mit beispielsweise unterschiedlichen Lagerzeiten gültig ist, ist allerdings nur schwer möglich. Darüber hinaus ist es ebenfalls sehr komplex die Materialeigenschaften und/oder das Elastizitätsverhalten zu modellieren bei Teilen, die unterschiedlichen Temperaturschwankungen ausgesetzt waren.

Mitunter sind Informationen, die für eine solche Modellierung benötigt würden, nicht vorhanden. Darüber hinaus verändert sich das Elastizitätsverhalten eines Teils je nach Anzahl der bisher durchgeführten Umformungen.

Im Stand der Technik wird unter anderem versucht obiges Problem zu lösen, indem der Umformungsprozess als Regelkreis modelliert wird. Diese Herangehensweise erfordert jedoch eine kontinuierliche Messung der aufgewendeten Kraft während der Umformung. Da allerdings nur ungenaue Kraftmessungen mit den herkömmlichen Kraftmesssensoren möglich sind, führt eine solche Herangehensweise nur zu unbefriedigenden Ergebnissen. Teile, bei denen die Abmessungen nach einem oder mehreren Umformungen Abweichungen aufweisen, die außerhalb eines bestimmten Toleranzbereichs liegen, werden aussortiert. Das Verhältnis zwischen Teilen, die nach der Umformung aussortiert werden, und der Gesamtanzahl der Teile, die umgeformt werden, wird allgemein als Ausschussrate bezeichnet.

In der DE 10 2007 002 320 A1 wird eine Lösung unter Verwendung eines Regelkreises beschrieben, wobei aber keine kontinuierliche Messung der Kraft während der Umformung erfolgt.

Die DE 10 2015 002 280 A1 offenbart ein Verfahren und eine Anlage zum automatisierten Richten eines Gussteils. In dem Verfahren führt ein Roboter das zu verformende Gussteil zunächst zu einer Messstation, in der aus der Geometrie des Gussteils ein Verzug und schließlich eine Richtstrategie ermittelt wird. Anschließend führt der Roboter das Gussteil einer Richtstation zu, die das Gussteil gemäß der Richtstrategie inkrementell verformt. In einer Ausführungsform schließen sich nach einem Richtvorgang ggf. weitere Mess- und und Richtvorgänge an. Erfindungsgemäß können auch Richtstrategien vorausgegangener Richtvorgänge miteinbezogen werden, mit Hilfe von in einer Datenbank hinterlegten Datensätzen.

Auch in der Druckschrift EP 3 095 533 A1 wird ein Verfahren zum automatisierten Richten von Werkstücken beschrieben, bei dem die Parameter des aktuellen Richtvorgangs auf Grundlage gespeicherter Parameter früherer Richtprozesse erstellt werden.

Insgesamt ist bisher keine zufriedenstellende technische Lösung für die oben beschriebenen Nachteile aus dem Stand der Technik bekannt. Es ist daher beispielsweise ausgehend von der DE 10 2015 002 280 A1 Aufgabe der Erfindung, ein automatisiertes Umformen von Teilen zu ermöglichen, bei dem eine kurze Zykluszeit mit einer geringen Ausschussrate erreicht wird.

Die Aufgabe wird durch ein Verfahren zum Umformen von Teilen, vorzugsweise von Fahrzeugteilen, gemäß Anspruch 1, ein computerlesbares Medium gemäß Anspruch 14, sowie ein Robotersystem gemäß Anspruch 15 gelöst.

Insbesondere wird die Aufgabe der Erfindung gelöst durch ein Verfahren zum Umformen, insbesondere Korrekturumformen und/oder Richten, von Teilen, vorzugsweise von Fahrzeugteilen, mit mindestens einem Robotersystem, wobei das Verfahren mindestens einen Umformungslauf mit den nachfolgenden Schritten umfasst:

a) Messen von Initialabweichungen an vorbestimmten Messstellen eines aktuellen umzuformenden Teils;

b) Bestimmen mindestens eines Umformungsparameters für gemessene Initialabweichungen unter Verwendung einer Datenstruktur, wobei in einem Auswahlschritt, bei dem aus mehreren in der Datenstruktur gespeicherten Datensätzen eine Anzahl an Datensätzen unter Berücksichtigung einer zugeordneten Initialabweichung für das Bestimmen des mindestens einen Umformungsparameters ausgewählt wird;

c) Umformen, insbesondere mittels mindestens eines Biegeschritts, des aktuellen umzuformenden Teils zumindest anhand des Umformungsparameters;

d) Messen von Finalabweichungen an mindestens einer der vorbestimmten Messstellen nach dem Umformen in Schritt c); und

e) Speichern von zusätzlichen Werten, die die Initialabweichungen, den Umformungsparameter und die Finalabweichungen angeben, in der Datenstruktur;

wobei der Umformungslauf für mindestens ein weiteres Teil unter Verwendung der in der Datenstruktur gespeicherten zusätzlichen Werte erfolgt.

Dabei wird der Umformungslauf für mindestens ein Teil mehrfach bis zur Erfüllung mindestens eines Anforderungskriteriums durchgeführt, wobei für mindestens ein Teil die Umformung vor dem Erreichen des Anforderungskriteriums abgebrochen wird, wenn eine vorbestimmte Anzahl von Umformungsläufen für das jeweilige Teil durchgeführt wurden. Ferner werden für ein Teil im Zuge der Durchführung einer Vielzahl von Umformungsläufen jeweils Werte gespeichert, die die Initialabweichungen, den Umformungsparameter und die Finalabweichungen sowie eine Umformungsversuchszahl des jeweiligen Umformungslaufs angeben.

Ein Kerngedanke der Erfindung beruht auf der Erkenntnis, dass Werte, die bei einem Umformungslauf für ein aktuelles Teil verwendet, gemessen und/oder bestimmt werden, für an weiteren Teilen durchgeführte Umformungsläufe vorteilhaft berücksichtigt werden können. Insbesondere wird ein Datensatz pro Umformungslauf in der Datenstruktur gespeichert, wobei ein Datensatz vorzugsweise aus zusätzlichen Werten, die die Initialabweichungen, den Umformungsparameter und die Finalabweichungen angeben, besteht.

Es ist folglich möglich, bei dem Umformungslauf eines weiteren Teils auf die Datensätze früherer Umformungsläufe zuzugreifen und aus den Datensätzen einen Umformungsparameter zu bestimmen, der zu einem präziseren Ergebnis, also zu geringeren Finalabweichungen führt.

Durch das Speichern von mehreren Datensätzen wird es insbesondere ermöglicht, mehrere Umformungsläufe bei dem Bestimmen des Umformungsparameters zu berücksichtigen.

Darüber hinaus fließen so auch Schwankungen der Materialeigenschaften und des Elastizitätsverhaltens der umzuformenden Teile adaptiv in das Bestimmen des Umformungsparameters ein.

Die Ergebnisse des erfindungsgemäßen Verfahrens werden mit einer zunehmenden Anzahl von Umformungsläufen präziser, was sich insbesondere dadurch zeigt, dass die erreichten Finalabweichungen kleiner werden und weniger Umformungsläufe pro umzuformendes Teil benötigt werden.

Unter einem Teil, insbesondere Fahrzeugteil, wird hierbei, wie bereits eingangs erwähnt, ein Teil verstanden, an dem weitere Bearbeitungs-, Nachbearbeitungs- und/oder Umformungsschritte durchgeführt werden können. Teile können beispielsweise zu komplexen Strukturteilen, wie Federstützteilen, vorderen Dämpferbrücken für Fahrzeuge, oder auch zu vergleichsweise einfacheren Strukturteilen, wie Platten, Barren, Trägern oder Wölbungen verarbeitet werden. Ferner können die Teile beispielsweise aus Metall oder einer Metalllegierung, wie zum Beispiel Aluminium oder einer Aluminiumlegierung, bestehen.

Unter einem Umformungsparameter kann abhängig von dem konkret ausgeführten Umformungsschritt, beispielsweise wenn ein Biegeschritt ausgeführt wird, ein Biegewinkel verstanden werden, oder wenn beispielsweise ein Verschiebeschritt ausgeführt wird, eine Verschieberichtung und/oder eine Verschiebestrecke verstanden werden.

Das Messen der Initialabweichungen bzw. Finalabweichungen bedeutet hierbei, dass an den vorbestimmten Messstellen auf der Oberfläche des aktuellen umzuformenden Teils beispielsweise mit einem Abstandssensor (vorzugsweise einem Lasermesssensor) ein Abstand zwischen der Oberfläche des aktuellen umzuformenden Teils und dem Abstandssensor gemessen wird. Der gemessene Abstandswert wird mit einem Soll-Abstandswert verglichen, woraus sich eine gemessene Abweichung ergibt. Der Begriff Initialabweichungen bezieht sich hierbei darauf, dass dies Abweichungen sind, die bei einem Umformungslauf vor dem Umformen vorliegen. Entsprechend bezieht sich der Begriff Finalabweichungen darauf, dass dies Abweichungen sind, die bei einem Umformungslauf nach dem Umformen vorliegen.

Es wird bevorzugt, dass die Datenstruktur eine Vielzahl von zusätzlichen Werten umfasst, die im Zug der Umformung einer Vielzahl von Teilen in der Datenstruktur gespeichert wurden, wodurch ein Umformungsparameter bestimmt werden kann, der zu geringeren Finalabweichungen führt.

Insbesondere wird im Schritt b) eine Anpassungsfunktion, insbesondere ein Polynom, basierend auf mindestens zwei aus der Datenstruktur ausgelesenen Umformungsparametern erstellt, wobei die Anpassungsfunktion vorzugsweise eine Abhängigkeit zwischen den Umformungsparametern und den Finalabweichungen approximiert.

Aus der Anpassungsfunktion können auch für Umformungsparameter und Finalabweichungen, die bisher nicht bestimmt bzw. gemessen wurden, Werte bestimmt werden. Das Bestimmen des Umformungsparameters wird hierdurch vereinfacht.

In Schritt b) umfasst das Verfahren ferner einen Auswahlschritt, bei dem aus mehreren in der Datenstruktur gespeicherten Datensätzen eine Anzahl an Datensätzen unter Berücksichtigung einer zugeordneten Initialabweichung ausgewählt werden, wobei in einer bevorzugten Ausführungsform die Anzahl ausgewählter Datensätze größer gleich 2 oder 5 oder 15 ist und die Auswahl vorzugsweise so erfolgt, dass sich die in Schritt a) gemessenen Initialabweichungen und die dem jeweiligen Datensatz zugeordneten Initialabweichungen um höchstens 5 oder 2 oder 1 oder 0,5 Prozent unterscheiden.

Insbesondere umfasst Schritt b) des Verfahrens folgenden Schritt: Bestimmen mindestens eines Umformungsparameters für gemessene Initialabweichungen unter Verwendung einer Datenstruktur, wobei in einem Auswahlschritt, bei dem aus mehreren in der Datenstruktur gespeicherten Datensätzen eine Anzahl an Datensätzen unter Berücksichtigung einer zugeordneten Initialabweichung für das Bestimmen des mindestens einen Umformungsparameters ausgewählt werden.

Hierdurch werden nur die Datensätze ausgewählt, die eine möglichst ähnliche Ausgangssituation, also möglichst ähnliche Initialabweichungen, aufweisen. Beispielsweise unterscheiden sich die in Schritt a) gemessenen Initialabweichungen und die dem jeweiligen Datensatz zugeordneten Initialabweichungen um höchstens 0,3mm oder 0,2mm oder 0,1mm oder 0,05mm.

Insbesondere approximiert die Anpassungsfunktion die Abhängigkeit zwischen den Umformungsparametern und den Finalabweichungen der ausgewählten Initialabweichungen, wodurch ein Umformungsparameter bestimmt werden kann, der voraussichtlich zu möglichst kleinen Finalabweichungen führt. Vorzugsweise ergibt sich der bestimmte Umformungsparameter aus der Anpassungsfunktion für Finalabweichungen nahe Null, um möglichst Finalabweichungen von Null zu erreichen.

Der Umformungslauf für mindestens ein Teil wird mehrfach bis zur Erfüllung mindestens eines Anforderungskriteriums durchgeführt, wodurch Abweichungen an den einzelnen vorbestimmten Messstellen des umzuformenden Teils sukzessive verringert werden, bis das Anforderungskriterium erfüllt ist.

Dabei wird für mindestens ein Teil die Umformung vor dem Erreichen des Anforderungskriteriums abgebrochen, wenn eine vorbestimmte Anzahl, insbesondere kleiner als 10 oder 7 oder 5, von Umformungsläufen für das jeweilige Teil durchgeführt wurden.

Durch das Abbrechen der Umformung vor dem Erreichen des Anforderungskriteriums, wird berücksichtigt, dass sich das Elastizitätsverhalten und auch die Materialeigenschaften des Teils je nach Anzahl der durchgeführten Umformungsläufe verändert.

Besonders bevorzugt werden für ein Teil im Zuge der Durchführung einer Vielzahl von Umformungsläufen jeweils Werte gespeichert, die die Initialabweichungen, den Umformungsparameter und die Finalabweichungen sowie eine Umformungsversuchszahl des jeweiligen Umformungslaufs angeben, wodurch eine Zuordnung zwischen den Werten, die die Initialabweichungen, den Umformungsparameter und die Finalabweichungen angeben, und den Werten, die die Umformungsversuchszahl angeben, möglich ist.

Insbesondere werden im/in einem Auswahlschritt die in der Datenstruktur gespeicherten Initialabweichungen berücksichtigt, die eine gespeicherte Umformungsversuchszahl aufweisen, die der aktuellen Umformungsversuchszahl entspricht.

Es wird bevorzugt, dass in Schritt e) in der Datenstruktur ein Zeitstempel für jedes umgeformte Teil zusammen mit den dazugehörigen Initialabweichungen, Umformungsparameter und Finalabweichungen gespeichert wird.

Anhand des gespeicherten Zeitstempels kann anschließend ermittelt werden, wie alt der gespeicherte Datensatz, also die Werte, die die gemessenen Initialabweichungen und Finalabweichungen mit dem dazugehörigen Umformungsparameter angeben, ist, woraus auf eine Relevanz des Datensatzes geschlossen werden kann.

In einer weiteren bevorzugten Ausführungsform werden in Schritt b) für die in Schritt a) gemessenen Initialabweichungen nur die Umformungsparameter und Finalabweichungen einer bestimmten Anzahl von zuletzt umgeformten Teilen berücksichtigt.

Insbesondere hängt hierbei die bestimmte Anzahl der zu berücksichtigenden, zuletzt umgeformten Teile von der Zykluszeit ab. Vorzugsweise beträgt die bestimmte Anzahl der zuletzt umgeformten Teile kleiner gleich 1000, insbesondere kleiner gleich 500, vorzugsweise kleiner gleich 100.

Insbesondere kann das Umformen in Schritt c) ein Verschieben des aktuellen umzuformenden Teils und/oder ein Biegen des aktuellen umzuformenden Teils um eine Biegeachse umfassen, wodurch auch komplexe Umformungen durchgeführt werden können.

Es wird ferner bevorzugt, dass das Verfahren einen Vorverarbeitungsschritt umfasst, der zwischen Schritt a) und Schritt b) durchgeführt wird, in welchem anhand von Vorzeichen der gemessenen Initialabweichungen von mindestens zwei voneinander abhängiger Messstellen entschieden wird, ob ein Verschieben und/oder ein Biegen des aktuellen umzuformenden Teils durchgeführt wird.

Beispielsweise kann unter zwei oder mehreren abhängigen Messstellen verstanden werden, dass sich durch ein Umformen des Teils an einer der beiden oder mehreren Messstellen auch eine Veränderung der gemessenen Abweichung der anderen Messstelle/n ergibt.

Durch den Vorverarbeitungsschritt ist eine vereinfachte Verarbeitung möglich, wobei eine Abhängigkeit/en von mehreren Messstellen berücksichtigt wird/werden.

Vorzugsweise wird in dem Vorverarbeitungsschritt anhand des Vorzeichens der gemessenen Initialabweichungen die Biegeachse, um die das aktuelle umzuformende Teil gebogen wird, verschoben und/oder gedreht, wodurch ggf. eine vorteilhaftere Position und/oder Ausrichtung der Biegeachse verwendet werden kann. Es kann hierdurch insbesondere an die vorhandene Situation angepasst werden.

Insbesondere werden in dem Vorverarbeitungsschritt die gemessenen Initialabweichungen von mindestens zwei voneinander abhängigen Messstellen in eine Vorverarbeitungsfunktion eingegeben, die nach einem Regelwerk, das insbesondere abhängig von den Vorzeichen der gemessenen Initialabweichungen ist, die Werte der gemessenen Initialabweichungen der abhängigen Messstellen fusioniert.

Durch die Verwendung der Vorverarbeitungsfunktion kann aus den mehreren Werten, die für mehrere voneinander abhängige Messstellen gemessen wurden, ein charakteristischer Wert bestimmt werden, der im Zuge des Umformungslaufs, insbesondere für Schritt b), verwendet wird. Insbesondere kann es sich bei der Vorverarbeitungsfunktion um eine Mittelwertfunktion handeln, wie beispielsweise einen arithmetischen Mittelwert der Beträge der einzelnen Eingabewerte, einem gewichteten Mittelwert der Eingabewerte oder dergleichen.

Die Aufgabe der Erfindung wird weiterhin durch ein computerlesbares Medium gelöst, das Anweisungen umfasst, die, wenn sie von mindestens einem Prozessor ausgeführt werden, bewirken, dass der Prozessor das obige Verfahren ausführt.

Darüber hinaus wird die Aufgabe der Erfindung durch ein Robotersystem zum Umformen mit computerlesbarem Medium nach Anspruch 14 gelöst, wobei das Robotersystem das Folgende aufweist:

- mindestens eine Umformungsvorrichtung, die insbesondere einen oder mehrere, vorzugsweise mehrachsige, Roboterarme aufweist, mit dem bzw. denen verschiedene Umformungen eines umzuformenden Teils anhand von Umformungsparametern ausführbar sind;

- einen Messsensor, insbesondere einen Lasermesssensor, mit dem Initialabweichungen und Finalabweichungen messbar sind;

- eine Dateneinheit, in der Initialabweichungen, Umformungsparameter, und Finalabweichungen in Form einer Datenstruktur speicherbar sind;

wobei in einer Bestimmungseinheit Umformungsparameter für die von dem Messsensor gemessenen Initialabweichungen aus den in der Dateneinheit gespeicherten Finalabweichungen mit den dazugehörigen Umformungsparametern approximiert und/oder berechnet werden.

Weitere Ausführungsformen ergeben sich anhand der Unteransprüche.

Nachfolgend wird die Erfindung anhand von nicht einschränkenden Ausführungsbeispielen unter Bezug auf die beigefügten Zeichnungen weiter erläutert. Hierbei zeigen:

Fig. 1    ein Ablaufdiagramm eines Ausführungsbeispiels der vorliegenden Erfindung;

Fig. 2    einen Querschnitt durch ein aktuelles umzuformendes Teil während eines Umformungslaufs nach einem erfindungsgemäßen Ausführungsbeispiel;

Fig. 3    eine Draufsicht eines aktuellen umzuformenden Teils während eines Umformungslaufs nach einem erfindungsgemäßen Ausführungsbeispiel;

Fig. 4    eine schematische Darstellung eines erfindungsgemäßen Ausführungsbeispiels einer Datenstruktur; sowie

Fig. 5    eine schematische Darstellung eines erfindungsgemäßen Ausführungsbeispiels zum Bestimmen eines Umformungsparameters.

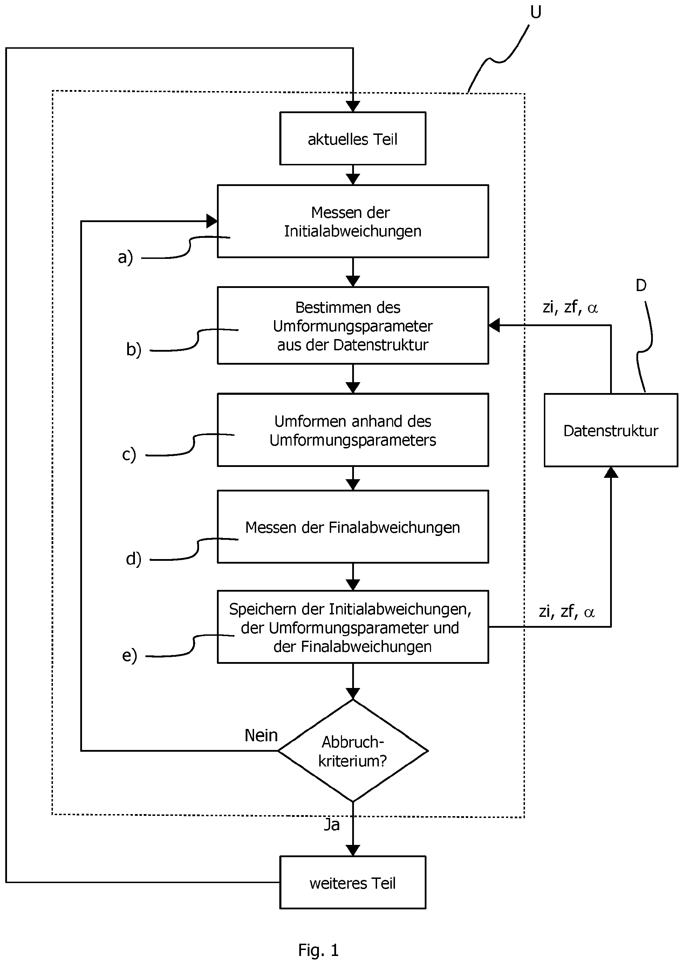

In Fig. 1 ist ein Ablaufdiagramm von einem Ausführungsbeispiel der vorliegenden Erfindung abgebildet.

Im gezeigten Ausführungsbeispiel des erfindungsgemäßen Verfahrens wird ein Umformungslauf U durchgeführt, bei dem die Schritte a) bis e) für ein aktuelles umzuformendes Teil 20 durchgeführt werden.

Es werden zunächst Initialabweichungen $z_i$ an vorbestimmten Messstellen des aktuellen umzuformenden Teils 20 gemessen (Schritt a)). Die vorbestimmten Messstellen $p_1$, $p_2$, $p_3$ sind vordefinierte Stellen auf der Oberfläche des aktuellen umzuformenden Teils 20, an welchen mit einem Abstandsensor, wie beispielsweise einem Lasermesssensor, gemessen wird, welchen Abstand die Oberfläche des aktuellen umzuformenden Teils 20 an der vordefinierten Stelle zu dem Abstandssensor aufweist. Der gemessene Abstand wird anschließend von einem gewünschten Soll-Abstand abgezogen, so dass eine Initialabweichung $z_i$ bestimmt wird.

Anschließend wird mindestens ein Umformungsparameter $\alpha$ für die gemessenen Initialabweichungen $z_i$ unter Verwendung einer Datenstruktur D bestimmt (Schritt b)). Im vorliegenden Ausführungsbeispiel wird beispielsweise ein Biegeschritt an dem aktuellen umzuformenden Teil vorgenommen. Dementsprechend wird ein Biegewinkel $\alpha$ als Umformungsparameter $\alpha$ bestimmt, um welchen das aktuelle umzuformende Teil 20 um eine bestimmte Biegeachse B gebogen wird. Für das

Bestimmen des Umformungsparameters $\alpha$ wird die Datenstruktur D verwendet.

Anhand des bestimmten Umformungsparameters $\alpha$ wird nun das aktuelle umzuformende Teil 20 umgeformt (Schritt c)). Im vorliegenden Beispiel wird insbesondere das umzuformende Teil 20 um die bestimmte Biegeachse B um einen Biegewinkel $\alpha$ gebogen.

Nach dem Umformen werden Finalabweichungen zf an den Messstellen p1, p2, p3 des umzuformenden Teils erneut gemessen (Schritt d)).

Damit die gemessenen Initialabweichungen zi und Finalabweichungen zf und der bestimmte Umformungsparameter $\alpha$ für das Bestimmen eines genaueren Umformungsparameters $\alpha$ in Umformungsläufen U für weiterer Teile herangezogen werden können, werden zusätzliche Werte in der Datenstruktur D gespeichert (Schritt e)), die die Initialabweichungen zi, den Umformungsparameters $\alpha$ und die Finalabweichungen zf angeben.

Anschließend wird entschieden, ob der Umformungslauf U für das aktuelle Teil erneut durchgeführt wird, oder ob ein neues, weiteres Teil im Umformungslauf U bearbeitet werden soll. Für diese Entscheidung können unterschiedliche Abbruchkriterien herangezogen werden. Beispielsweise kann eine maximale Anzahl an Umformungsversuchen definiert sein und/oder ein oder mehrere Schwellwerte für die Finalabweichungen, wobei ein weiteres umzuformendes Teil anschließend die Umformungsläufe U als neues aktuelles umzuformendes Teil 20 durchläuft.

Die in der Datenstruktur D gespeicherten Werte werden nun im Umformungslauf U für das neue aktuelle umzuformende Teil 20 verwendet.

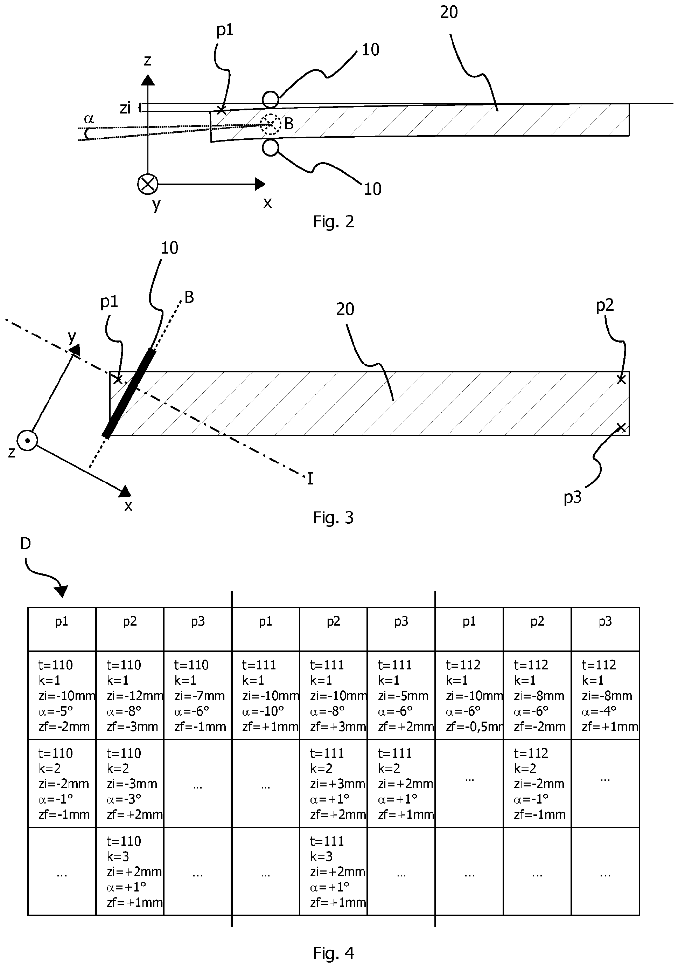

In Fig. 2 ist ein Querschnitt durch ein aktuelles umzuformendes Teil entlang einer Schnittfläche I gezeigt, wobei ein Messkoordinatensystem mit den Achsen x, y und z abgebildet ist. Im dargestellten Beispiel weist das aktuelle umzuformende Teil 20 eine Initialabweichung zi entlang der z-Achse an der vorbestimmten Messstelle p1 auf. Mit der Umformungsvorrichtung 10, die in Fig. 2 als schematisches Umformungswerkzeug 10 dargestellt ist, wird nachdem der Umformungsparameter $\alpha$ bestimmt wurde, das aktuelle umzuformende Teil 20 mit der Umformungsvorrichtung 10 entsprechend dem Umformungsparameter $\alpha$ umgeformt. Bei dem in Fig. 2 abgebildeten Beispiel wird das aktuelle umzuformende Teil 20 mit der Umformungsvorrichtung 10 um einen Biegewinkel $\alpha$ um eine Biegeachse B gebogen.

In Fig. 3 wird eine Draufsicht des aktuellen umzuformenden Teils 20 gezeigt, von dem in Fig. 2 ein Querschnitt entlang der Schnittfläche I gezeigt wird. In Fig. 3 sind die Messstellen p1, p2 und p3 auf der Oberfläche des aktuellen umzuformenden Teils 20 verteilt, wobei vorzugsweise Eckpunkte gewählt wurden.

Die konkrete Verteilung der vorbestimmten Messstellen ist natürlich von den Qualitätsanforderungen und der Geometrie des umzuformenden Teils abhängig.

Darüber hinaus wird in Fig. 3 die Umformungsvorrichtung 10 schematisch dargestellt, wobei die Biegeachse B entlang der Umformungsvorrichtung 10 verläuft.

In Fig. 4 ist eine schematische Darstellung eines erfindungsgemäßen Ausführungsbeispiels einer Datenstruktur D dargestellt. Die Datenstruktur D weist mehrere Datenelemente auf, in denen Werte gespeichert werden können, die Initialabweichungen zi, Umformungsparameter $\alpha$ sowie Finalabweichungen zf angeben. Darüber hinaus können auch weitere Werte, wie beispielsweise ein Zeitstempel t und eine Umformungsversuchszahl k in dem jeweiligen Datenelement gespeichert sein.

In dem abgebildeten Beispiel werden die Initialabweichungen und Finalabweichungen zf jeder Messstelle mit dem dazugehörigen Umformungsparameter $\alpha$ an den Punkten p1, p2 und p3 jeweils in der Datenstruktur gespeichert.

Das in Fig. 4 abgebildete, vereinfachte Beispiel zeigt hierbei Wertebeispiele für drei verschiedene Teile, die durch die drei verschiedenen Zeitstempel t=110, t=111 und t=112 dargestellt sind.

Die Umformungsversuchszahl k gibt den jeweiligen Umformungsversuch an. Datenelemente in denen ein "..."-Symbol eingetragen ist, sind nicht belegt, da beispielsweise eines der möglichen Abbruchkriterien erreicht wurde.

Im vorliegenden Beispiel ist ein Abbruchkriterium dadurch definiert, dass die aktuelle Finalabweichung zf innerhalb eines Intervalls von $\pm 1$mm liegt. In diesem Beispiel gibt es also einen vorgegebenen Toleranzbereich von $\pm 1$mm. Natürlich sind auch andere (zusätzliche) Abbruchkriterien, wie zum Beispiel eine maximale Anzahl von Umformungsversuchen, oder weitere und/oder andere Zahlenwerte für die Finalabweichungen möglich.

Beispielsweise wird an der Messstelle p1 zunächst eine Initialabweichung von - 8mm gemessen. Nun wird anhand der Werte, die bisher in der Datenstruktur D gespeichert wurden ein Umformungsparameter $\alpha$ bestimmt.

Anhand des bestimmten Umformungsparameters $\alpha$ wird das aktuelle umzuformende Teil 20 umgeformt. Im abgebildeten Beispiel wird ein Biegeschritt durchgeführt, es handelt sich bei dem Umformungsparameter $\alpha$ also um einen Biegewinkel $\alpha$ um den das aktuelle umzuformende Teil 20 um eine Biegeachse B gebogen wird. Der bestimmte Biegewinkel $\alpha$ beträgt in diesem Fall -5°. Die gemessene Finalabweichung zf beträgt für die Messstelle p1 mit dem Zeitstempel t=110 bei dem ersten Umformungsversuch (also mit der Umformungsversuchszahl k=1) -2mm, was außerhalb des Toleranzbereichs liegt.

Die Initialabweichung zi für den zweiten Umformungsversuch beträgt nun -2mm, woraus erneut ein Umformungsparameter $\alpha$ anhand der in der Datenstruktur D gespeicherten Werte bestimmt wird. Daraufhin wird ein weiterer Umformungsversuch mit einem erneut bestimmten Umformungsparameter α durchgeführt und die Finalabweichung gemessen. Die Finalabweichung liegt nun mit -1mm im Toleranzbereich.

In Fig. 4 sind weitere beispielhafte Werte für die Messstellen p2 und p3 abgebildet. Die oben beschriebenen Schritte können hierbei je nachdem, nacheinander für jede einzelne Messstelle p1, p2 und p3 durchgeführt werden, oder, sofern es die Umformungsvorrichtung 10 ermöglicht, auch parallel durchgeführt werden.

Das Bestimmen des Umformungsparameters α bzw. Biegewinkels α geschieht beispielsweise wie folgt: Für eine gemessene Initialabweichung zi an der Messstelle p1, die beispielsweise -10mm beträgt, wird die Datenstruktur D nach Intitialabweichungen zi an der Messstelle p1 durchsucht, die zi ± a (wobei a einer Abweichungstoleranz entspricht), also beispielsweise -10mm ±0,1mm, betragen. Generell werden Initialabweichungen zi bevorzugt, die möglichst der tatsächlich gemessenen Initialabweichung zi entsprechen. Die Abweichungstoleranz a wird also auf einen Wert kleiner gleich 0,5mm, insbesondere kleiner gleich 0,2mm oder 0,1mm festgelegt.

Da mit zunehmender Zeit die in der Datenstruktur D gespeicherten Daten entsprechend umfangreich werden, können die durch die Suche erhaltenen Ergebnisse weiter eingeschränkt werden. Beispielsweise können Datensätze von älteren Umformungsdurchläufen U anhand des Zeitstempels t ausgeschlossen werden.

Im vorliegenden vereinfachten Beispiel werden an der Messstelle p1 für die Zeitstempel t=110, t=111 und t=112 für den ersten Umformungsversuch k=1 jeweils Initialabweichungen zi gefunden, die den Wert -10mm aufweisen.

Die Umformungsparameter α mit den sich daraus ergebenden Finalabweichungen zf betragen im vorliegenden Beispiel -5° und -2mm (bei t=110), -10° und +3mm (bei t=111) sowie -6° und -0,5mm (bei t=111).

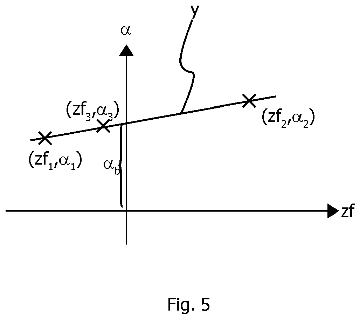

Nun wird der Umformungsparameter α als der bestimmte Umformungsparameter $\alpha_b$ ausgewählt, der zu der vorraussichtlich zu der kleinsten Finalabweichung zf führt. Im vorliegenden Beispiel wäre also der bestimmte Umformungsparameter $\alpha_b$ =-6°. Der Umformungsparameter $\alpha_b$ kann allerdings auch in einem Vorverarbeitungsschritt anhand einer Anpassungsfunktion y bestimmt werden, wie im Zusammenhang mit Fig. 5 beschrieben wird.

In Fig. 5 sind die aus dem oben beschriebenen und in Fig. 4 dargestellten Beispiel erhaltenen Umformungsparameter α über den dazugehörigen Finalabweichungen zf aufgetragen. Die aus der Datenstruktur D anhand der Initialabweichung zi = - 10mm erhaltenen Werte sind als $(zf_1, \alpha_1)$, $(zf_2, \alpha_2)$ und $(zf_3, \alpha_3)$ bezeichnet, wobei $(zf_1, \alpha_1)$ = (-5°, -2mm), $(zf_2, \alpha_2)$ = (-10°, +3mm) und $(zf_3, \alpha_3)$ = (-6°, 0,5mm) entsprechen.

Nun kann eine Anpassungsfunktion y bestimmt bzw. berechnet bzw. geschätzt werden, die die aufgetragenen Werte möglichst gut beschreibt. Im vorliegenden Ausführungsbeispiel wird eine einfache Gerade mit der Form:

$$y = m \cdot zf + k$$

verwendet, wobei m die Steigung der Gerade und k den Ordinatenabschnitt der Geraden bezeichnet. Das Bestimmen einer linearen Anpassungsfunktion wird auch als Linear-Fitting bezeichnet. Natürlich sind auch andere Anpassungsfunktionen y, die beispielsweise durch ein Polynom höheren Grades beschrieben werden, möglich. Die Anpassungsfunktion y approximiert folglich die Abhängigkeit zwischen den Umformungsparametern α und den Finalabweichungen zf für eine bestimmte Intitialabweichung zi.

Eine niedrige Finalabweichung zf kann nun besonders einfach anhand der Anpassungsfunktion y bestimmt werden, indem der Ordinatenabschnitt Jeder Anpassungfunktion y als bestimmter Umformungsparameter $\alpha_b$ verwendet wird.

Bezugszeichenliste

| | |
|---|---|
| 10 | Umformungsvorrichtung (Umformungswerkzeug); |
| 20 | (aktuelles bzw. weiteres) umzuformendes Teil; |
| B | Biegeachse; |
| D | Datenstruktur; |
| I | Schnittfläche; |
| k | Umformungsversuchszahl; |
| m | Steigung der Anpassungsfunktion; |
| n | bestimmte Anzahl von berücksichtigten Teilen; |
| p1, p2, p3 | vordefinierte Messstelle; |
| t | Zeitstempel; |
| U | Umformungslauf; |
| y | Anpassungsfunktion; |
| zi | Initialabweichungen; |
| zis | ausgewählte Initialabweichungen; |
| zf | Finalabweichungen; |
| α | Umformungsparameter. |

**Patentansprüche**

1. Verfahren zum Umformen, insbesondere Korrekturumformen und/oder Richten, von Teilen, vorzugsweise von Fahrzeugteilen, mit mindestens einem Robotersystem, wobei das Verfahren mindestens einen Umformungslauf (U) mit den nachfolgenden Schritten umfasst:

a) Messen von Initialabweichungen (zi) an vorbestimmten Messstellen (p1, p2, p3) eines aktuellen umzuformenden Teils (20);

b) Bestimmen mindestens eines Umformungsparameters ($\alpha$) für gemessene Initialabweichungen (zi) unter Verwendung einer Datenstruktur (D), wobei in einem Auswahlschritt, bei dem aus mehreren in der Datenstruktur (D) gespeicherten Datensätzen eine Anzahl an Datensätzen unter Berücksichtigung einer zugeordneten Initialabweichung (zi) für das Bestimmen des mindestens einen Umformungsparameters ($\alpha$) ausgewählt wird;

c) Umformen, insbesondere mittels mindestens eines Biegeschritts, des aktuellen umzuformenden Teils (20) zumindest anhand des Umformungsparameters ($\alpha$);

d) Messen von Finalabweichungen (zf) an mindestens einer der vorbestimmten Messstellen (p1, p2, p3) nach dem Umformen in Schritt c); und

e) Speichern von zusätzlichen Werten, die die Initialabweichungen (zi), den Umformungsparameter ($\alpha$) und die Finalabweichungen (zf) angeben, in der Datenstruktur (D);

wobei der Umformungslauf (U) für mindestens ein weiteres Teil unter Verwendung der in der Datenstruktur (D) gespeicherten zusätzlichen Werten erfolgt

**dadurch gekennzeichnet, dass**

der Umformungslauf (U) für mindestens ein Teil mehrfach bis zur Erfüllung mindestens eines Anforderungskriteriums durchgeführt wird, wobei für mindestens ein Teil die Umformung vor dem Erreichen des Anforderungskriteriums abgebrochen wird, wenn eine vorbestimmte Anzahl (k) von Umformungsläufen für das jeweilige Teil durchgeführt wurden und

für ein Teil im Zuge der Durchführung einer Vielzahl von Umformungsläufen jeweils Werte gespeichert werden, die die Initialabweichungen (zi), den Umformungsparameter ($\alpha$) und die Finalabweichungen (zf) sowie eine Umformungsversuchszahl (k) des jeweiligen Umformungslaufs (U) angeben.

2. Verfahren nach Anspruch 1,
wobei die Datenstruktur (D) eine Vielzahl von zusätzlichen Werten umfasst, die im Zuge der Umformung einer Vielzahl von Teilen in der Datenstruktur (D) gespeichert wurden.

3. Verfahren nach Anspruch 1,
wobei im Schritt b) eine Anpassungsfunktion, insbesondere ein Polynom, basierend auf mindestens zwei aus der Datenstruktur ausgelesenen Umformungsparametern ($\alpha$) erstellt wird, wobei die Anpassungsfunktion vorzugsweise eine Abhängigkeit zwischen den Umformungsparametern ($\alpha$) und den Finalabweichungen (zf) approximiert.

4. Verfahren nach Anspruch 1 oder 2,
wobei in dem Auswahlschritt in Schritt b), die eine Anzahl an Datensätzen, die unter Berücksichtigung einer zugeordneten Initialabweichung (zi) ausgewählt wird, größer gleich 2 oder 5 oder 15 ist, wobei die Auswahl vorzugsweise so erfolgt, dass sich die in Schritt a) gemessenen Initialabweichungen (zi) und die dem jeweiligen Datensatz zugeordnete Initialabweichungen (zis) um höchstens 5 oder 2 oder 1 oder 0,5 Prozent unterscheiden.

5. Verfahren nach Anspruch 3,
wobei die Anpassungsfunktion die Abhängigkeit zwischen den Umformungsparametern ($\alpha$) und den Finalabweichungen (zf) der ausgewählten Intitialabweichungen (zis) approximiert.

6. Verfahren nach einem der vorhergehenden Ansprüche,
wobei die vorbestimmte Anzahl (k) kleiner als 10 oder 7 oder 5 ist.

7. Verfahren nach einem der vorhergehenden Ansprüche,
wobei im Auswahlschritt die in der Datenstruktur (D) gespeicherten Initialabweichungen (zi) berücksichtigt werden, die eine gespeicherte Umformungsversuchszahl aufweisen, die der aktuellen Umformungsversuchszahl (k) entspricht.

8. Verfahren nach einem der vorhergehenden Ansprüche,
wobei in Schritt e) in der Datenstruktur (D) ein Zeitstempel (t) für jedes umgeformte Teil zusammen mit den dazugehörigen Initialabweichungen (zi), Umformungsparameter ($\alpha$) und Finalabweichungen (zf) gespeichert wird.

9. Verfahren nach einem der vorhergehenden Ansprüche,
wobei in Schritt b) für die in Schritt a) gemessenen Initialabweichungen (zi) nur die Umformungsparameter ($\alpha$) und Finalabweichungen (zf) einer bestimmten Anzahl (n) von zuletzt umgeformten Teilen berücksichtigt werden, wobei vorzugsweise die bestimmte Anzahl (n) der zuletzt umgeformten Teile kleiner gleich 1000, insbesondere kleiner gleich 500, vorzugsweise kleiner gleich 100 beträgt.

10. Verfahren nach einem der vorhergehenden Ansprüche,
wobei das Umformen in Schritt c) ein Verschieben des aktuellen umzuformenden Teils (20) und/oder ein Biegen des aktuellen umzuformenden Teils um eine Biegeachse (B) umfassen kann.

11. Verfahren nach einem der vorhergehenden Ansprüche,

ferner umfassend einen Vorverarbeitungsschritt, der zwischen Schritt a) und Schritt b) durchgeführt wird, in welchem anhand von Vorzeichen der gemessenen Initialabweichungen (zi) von mindestens zwei voneinander abhängigen Messstellen entschieden wird, ob ein Verschieben und/oder ein Biegen des aktuellen umzuformenden Teils (20) durchgeführt wird.

12. Verfahren nach Anspruch 11,
wobei in dem Vorverarbeitungsschritt anhand des Vorzeichens der gemessenen Initialabweichungen (zi) die Biegeachse (B), um die das aktuelle umzuformende Teil (20) gebogen wird, verschoben und/oder gedreht wird.

13. Verfahren nach Anspruch 11 oder Anspruch 12,
wobei in dem Vorverarbeitungsschritt, die gemessenen Initialabweichungen (zi) von mindestens zwei voneinander abhängigen Messstellen in eine Vorverarbeitungsfunktion eingegeben werden, die nach einem Regelwerk, das insbesondere abhängig von den Vorzeichen der gemessenen Initialabweichungen (zi) ist, die Werte der gemessenen Initialabweichungen (zi) der abhängigen Messstellen fusioniert.

14. Computerlesbares Medium, umfassend Anweisungen, die, wenn sie von mindestens einem Prozessor ausgeführt werden, bewirken, dass der Prozessor das Verfahren eines der vorherigen Ansprüche ausführt.

15. Robotersystem zum Umformen von Teilen mittels eines Verfahrens nach Ansprüchen 1-13

• mindestens eine Umformungsvorrichtung (10), die insbesondere einen oder mehrere, vorzugsweise mehrachsige, Roboterarme aufweist, mit dem bzw. denen verschiedene Umformungen eines umzuformenden Teils (20) anhand von Umformungsparametern (α) ausführbar sind;
• einen Messsensor, insbesondere einen Lasermesssensor, mit dem Initialabweichungen (zi) und Finalabweichungen (zf) messbar sind;
• eine Dateneinheit, in der Initialabweichungen (zi), Umformungsparameter (α), und Finalabweichungen (zf) in Form einer Datenstruktur (D) speicherbar sind;

wobei in einer Bestimmungseinheit Umformungsparameter (α) für die von dem Messsensor gemessenen Initialabweichungen (zi) aus den in der Dateneinheit gespeicherten Finalabweichungen (zf) mit den dazugehörigen Umformungsparametern (α) approximiert und/oder berechnet werden.

**Claims**

1. Method for forming, in particular corrective forming and/or straightening, parts, preferably vehicle parts, with at least one robot system, the method comprising at least one forming run (U) with the following steps:

a) measuring initial deviations (zi) at predetermined measuring points (p1, p2, p3) of a current part (20) to be reformed;
b) determining at least one forming parameter (α) for measured initial deviations (zi) using a data structure (D), wherein in a selection step in which a number of data records is selected from a plurality of data records stored in the data structure (D), taking into account an associated initial deviation (zi) for determining the at least one forming parameter (α);
c) forming, in particular by means of at least one bending step, the current part (20) to be formed at least on the basis of the forming parameter (α);
d) measuring final deviations (zf) at at least one of the predetermined measuring points (p1, p2, p3) after the forming in step c); and
e) Storing additional values indicating the initial deviations (zi), the forming parameter (α) and the final deviations (zf) in the data structure (D);
wherein the forming run (U) for at least one further part is performed using the additional values stored in the data structure (D)
**characterized in that**
the forming run (U) is carried out several times for at least one part until at least one requirement criterion is met, the forming being terminated for at least one part before the requirement criterion is reached if a predetermined number (k) of forming runs have been carried out for the respective part, and
for a part in the course of carrying out a plurality of forming runs, values are stored in each case which indicate the initial deviations (zi), the forming parameter (α) and the final deviations (zf) as well as a forming attempt number (k) of the respective forming run (U).

2. The method of claim 1,
wherein the data structure (D) comprises a plurality of additional values stored in the data structure (D) in the course of forming a plurality of parts.

3. The method according to claim 1,
wherein in step b) a fitting function, in particular a polynomial, is created based on at least two transformation parameters (α) read out from the data structure, wherein the fitting function preferably approximates a dependence between the transforma-

tion parameters ($\alpha$) and the final deviations (zf).

4. Method according to claim 1 or 2,
   wherein in the selection step in step b), the one number of data sets which is selected taking into account an associated initial deviation (zi) is greater than or equal to 2 or 5 or 15, the selection preferably being such that the initial deviations (zi) measured in step a) and the initial deviations (zis) associated with the respective data set differ by at most 5 or 2 or 1 or 0.5 percent.

5. The method according to claim 3,
   wherein the fitting function approximates the dependence between the forming parameters ($\alpha$) and the final deviations (zf) of the selected intitial deviations (zis).

6. The method according to any one of the preceding claims,
   where the predetermined number (k) is less than 10 or 7 or 5.

7. The method according to any one of the preceding claims,
   wherein in the selection step the initial deviations (zi) stored in the data structure (D) are taken into account, which have a stored forming attempt number corresponding to the current forming attempt number (k).

8. The method according to any one of the preceding claims,
   wherein in step e) a time stamp (t) is stored in the data structure (D) for each formed part together with the associated initial deviations (zi), forming parameters ($\alpha$) and final deviations (zf).

9. The method according to any one of the preceding claims,
   wherein in step b) for the initial deviations (zi) measured in step a) only the forming parameters ($\alpha$) and final deviations (zf) of a certain number (n) of last-formed parts are taken into account, wherein preferably the certain number (n) of last-formed parts is less than or equal to 1000, in particular less than or equal to 500, preferably less than or equal to 100.

10. The method according to any one of the preceding claims,
    wherein the forming in step c) may comprise shifting the current part (20) to be formed and/or bending the current part to be formed about a bending axis (B).

11. The method according to any one of the preceding claims,
    further comprising a preprocessing step, which is carried out between step a) and step b), in which it is decided on the basis of signs of the measured initial deviations (zi) of at least two mutually dependent measuring points whether a displacement and/or a bending of the current part (20) to be formed is carried out.

12. The method according to claim 11,
    wherein in the pre-processing step, on the basis of the sign of the measured initial deviations (zi), the bending axis (B) about which the current part (20) to be formed is bent is shifted and/or rotated.

13. The method of claim 11 or claim 12,
    wherein in the preprocessing step, the measured initial deviations (zi) of at least two mutually dependent measuring points are input into a preprocessing function which fuses the values of the measured initial deviations (zi) of the dependent measuring points according to a set of rules which is in particular dependent on the signs of the measured initial deviations (zi).

14. A computer-readable medium comprising instructions that, when executed by at least one processor, cause the processor to perform the method of any one of the preceding claims.

15. A robot system for forming parts by a method according to claims 1 to 13, comprising:

    • at least one forming device (10), which in particular has one or more, preferably multi-axis, robot arms, with which various forming operations of a part (20) to be formed can be carried out on the basis of forming parameters ($\alpha$);
    • a measuring sensor, in particular a laser measuring sensor, with which initial deviations (zi) and final deviations (zf) can be measured;
    • a data unit in which initial deviations (zi), forming parameters ($\alpha$), and final deviations (zf) are storable in the form of a data structure (D);

    wherein in a determination unit forming parameters ($\alpha$) for the initial deviations (zi) measured by the measuring sensor are approximated and/or calculated from the final deviations (zf) stored in the data unit with the associated forming parameters ($\alpha$).

**Revendications**

1. Procédé de formage, en particulier de formage de correction et/ou de dressage, de pièces, de préférence de pièces de véhicule, avec au moins un système robotique le procédé comprenant au moins un cycle de formage (U) avec les étapes suivantes :

   a) la mesure d'écarts initiaux (zi) en des points de mesure prédéterminés (p1, p2, p3) d'une pièce actuelle à transformer (20);

b) détermination d'au moins un paramètre de transformation ($\alpha$) pour des écarts initiaux (zi) mesurés en utilisant une structure de données (D), dans laquelle, dans une étape de sélection, dans laquelle un nombre d'ensembles de données est sélectionné parmi plusieurs ensembles de données mémorisés dans la structure de données (D) en tenant compte d'un écart initial (zi) associé pour la détermination d'au moins un paramètre de formage ($\alpha$);

c) le formage, en particulier au moyen d'au moins une étape de pliage, de la pièce (20) actuelle à déformer, au moins à l'aide du paramètre de formage ($\alpha$);

d) mesurer des écarts finaux (zf) en au moins l'un des points de mesure prédéterminés (p1, p2, p3) après le formage à l'étape c); et

e) Enregistrer dans la structure de données (D) des valeurs supplémentaires indiquant les écarts initiaux (zi), le paramètre de formage ($\alpha$) et les écarts finaux (zf);

le cycle de transformation (U) pour au moins une autre pièce étant effectué en utilisant les valeurs supplémentaires stockées dans la structure de données (D)

**caractérisé en ce que**

le cycle de formage (U) est effectué plusieurs fois pour au moins une pièce jusqu'à ce qu'au moins un critère d'exigence soit rempli, le formage étant interrompu pour au moins une pièce avant que le critère d'exigence ne soit atteint lorsqu'un nombre prédéterminé (k) de cycles de formage ont été effectués pour la pièce concernée et

pour une pièce au cours de l'exécution d'une pluralité de cycles de déformation, des valeurs sont respectivement mémorisées, qui indiquent les écarts initiaux (zi), le paramètre de formage ($\alpha$) et les écarts finaux (zf) ainsi qu'un nombre d'essais de déformation (k) du cycle de déformation respectif (U).

2. Procédé selon la revendication 1, dans lequel la structure de données (D) comprend une pluralité de valeurs supplémentaires qui ont été stockées dans la structure de données (D) au cours du formage d'une pluralité de pièces.

3. Procédé selon la revendication 1, une fonction d'adaptation, en particulier un polynôme, étant établie à l'étape b) sur la base d'au moins deux paramètres de formage ($\alpha$) lus dans la structure de données, la fonction d'adaptation approximant de préférence une dépendance entre les paramètres de formage ($\alpha$) et les écarts finaux (zf).

4. Procédé selon la revendication 1 ou 2, dans lequel, dans l'étape de sélection à l'étape b), le nombre d'ensembles de données qui est sélectionné en tenant compte d'un écart initial (zi) associé est supérieur ou égal à 2 ou 5 ou 15, la sélection étant effectuée de préférence de telle sorte que les écarts initiaux (zi) mesurés à l'étape a) et les écarts initiaux (zis) associés à l'ensemble de données respectif diffèrent au maximum de 5 ou 2 ou 1 ou 0,5 pour cent.

5. Procédé selon la revendication 3, la fonction d'adaptation approximant la dépendance entre les paramètres de formage ($\alpha$) et les écarts finaux (zf) des écarts intiaux sélectionnés (zis).

6. Procédé selon l'une quelconque des revendications précédentes, le nombre prédéterminé (k) étant inférieur à 10 ou 7 ou 5.

7. Procédé selon l'une quelconque des revendications précédentes, l'étape de sélection tenant compte des écarts initiaux (zi) mémorisés dans la structure de données (D), qui présentent un nombre d'essais de déformation mémorisé qui correspond au nombre d'essais de déformation actuel (k).

8. Procédé selon l'une quelconque des revendications précédentes,

dans lequel, à l'étape e), un horodatage (t) est mémorisé dans la structure de données (D) pour chaque pièce transformée, conjointement avec les écarts initiaux (zi), les paramètres de formage ($\alpha$) et les écarts finaux (zf) associés.

9. Procédé selon l'une quelconque des revendications précédentes, dans lequel, à l'étape b), pour les écarts initiaux (zi) mesurés à l'étape a), seuls les paramètres de formage ($\alpha$) et les écarts finaux (zf) d'un nombre déterminé (n) de pièces déformées en dernier lieu sont pris en compte, le nombre déterminé (n) de pièces déformées en dernier lieu étant de préférence inférieur ou égal à 1000, en particulier inférieur ou égal à 500, de préférence inférieur ou égal à 100.

10. Procédé selon l'une quelconque des revendications précédentes, dans lequel le formage à l'étape c) peut comprendre un déplacement de la pièce actuelle à former (20) et/ou un pliage de la pièce actuelle à former autour d'un axe de pliage (B).

11. Procédé selon l'une quelconque des revendications précédentes,

comprenant en outre une étape de prétraitement, qui est exécutée entre l'étape a) et l'étape b), dans laquelle il est décidé, à l'aide des signes des écarts initiaux mesurés ($z_i$) d'au moins deux points de mesure dépendants l'un de l'autre, si un déplacement et/ou un pliage de la pièce actuelle (20) à déformer est effectué.

12. Procédé selon la revendication 11, dans lequel, dans l'étape de prétraitement, à l'aide du signe des écarts initiaux ($z_i$) mesurés, on déplace et/ou on fait tourner l'axe de pliage (B) autour duquel la pièce (20) actuelle à déformer est pliée.

13. Procédé selon la revendication 11 ou la revendication 12, dans lequel, dans l'étape de prétraitement, les écarts initiaux mesurés ($z_i$) d'au moins deux points de mesure dépendants l'un de l'autre sont introduits dans une fonction de prétraitement qui, selon un ensemble de règles qui dépend en particulier des signes des écarts initiaux mesurés ($z_i$), fusionne les valeurs des écarts initiaux mesurés ($z_i$) des points de mesure dépendants.

14. Support lisible par ordinateur comprenant des instructions qui, lorsqu'elles sont exécutées par au moins un processeur, amènent le processeur à exécuter le procédé de l'une quelconque des revendications précédentes.

15. Système robotique pour le formage de pièces au moyen d'un procédé selon les revendications 1 à 13, comprenant:

> • au moins un dispositif de déformation (10), qui présente en particulier un ou plusieurs bras de robot, de préférence à plusieurs axes, avec lequel ou lesquels différentes déformations d'une pièce (20) à déformer peuvent être exécutées à l'aide de paramètres de formage ($\alpha$);
> • un capteur de mesure, en particulier un capteur de mesure laser, avec lequel les écarts initiaux ($z_i$) et les écarts finaux ($z_f$) peuvent être mesurés;
> • une unité de données, dans laquelle des écarts initiaux ($z_i$), des paramètres de formage ($\alpha$), et des écarts finaux ($z_f$) peuvent être mémorisés sous la forme d'une structure de données (D);

des paramètres de formage ($\alpha$) pour les écarts initiaux ($z_i$) mesurés par le capteur de mesure étant approximés et/ou calculés dans une unité de détermination à partir des écarts finaux ($z_f$) mémorisés dans l'unité de données avec les paramètres de formage ($\alpha$) correspondants.

U

aktuelles Teil

a) Messen der
Initialabweichungen

b) Bestimmen des
Umformungsparameter
aus der Datenstruktur

zi, zf, α

D

Datenstruktur

c) Umformen anhand des
Umformungsparameters

d) Messen der Finalabweichungen

e) Speichern der Initialabweichungen,
der Umformungsparameter und
der Finalabweichungen

zi, zf, α

Nein

Abbruchkriterium?

Ja

weiteres Teil

Fig. 1

Fig. 2

Fig. 3

D

| p1 | p2 | p3 | p1 | p2 | p3 | p1 | p2 | p3 |
|---|---|---|---|---|---|---|---|---|
| t=110<br>k=1<br>zi=-10mm<br>α=-5°<br>zf=-2mm | t=110<br>k=1<br>zi=-12mm<br>α=-8°<br>zf=-3mm | t=110<br>k=1<br>zi=-7mm<br>α=-6°<br>zf=-1mm | t=111<br>k=1<br>zi=-10mm<br>α=-10°<br>zf=+1mm | t=111<br>k=1<br>zi=-10mm<br>α=-8°<br>zf=+3mm | t=111<br>k=1<br>zi=-5mm<br>α=-6°<br>zf=+2mm | t=112<br>k=1<br>zi=-10mm<br>α=-6°<br>zf=-0,5mm | t=112<br>k=1<br>zi=-8mm<br>α=-6°<br>zf=-2mm | t=112<br>k=1<br>zi=-8mm<br>α=-4°<br>zf=+1mm |
| t=110<br>k=2<br>zi=-2mm<br>α=-1°<br>zf=-1mm | t=110<br>k=2<br>zi=-3mm<br>α=-3°<br>zf=+2mm | ... | ... | t=111<br>k=2<br>zi=+3mm<br>α=+1°<br>zf=+2mm | t=111<br>k=2<br>zi=+2mm<br>α=+1°<br>zf=+1mm | ... | t=112<br>k=2<br>zi=-2mm<br>α=-1°<br>zf=-1mm | ... |
| ... | t=110<br>k=3<br>zi=+2mm<br>α=+1°<br>zf=+1mm | ... | ... | t=111<br>k=3<br>zi=+2mm<br>α=+1°<br>zf=+1mm | ... | ... | ... | ... |

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007002320 A1
- DE 102015002280 A1
- EP 3095533 A1